# EUROPÄISCHE PATENTSCHRIFT

(11) **EP 2 709 840 B1**
(45) Veröffentlichungstag und Bekanntmachung des Hinweises auf die Patenterteilung: **08.07.2015**
(21) Anmeldenummer: 12766566.9
(22) Anmeldetag: 16.05.2012
(51) Int. Cl.: B30B 9/12

(54) **SCHNECKENPRESSE**
EXTRUDER
PRESSE À VIS

(30) Priorität: 20.05.2011 AT 2932011
(43) Veröffentlichungstag der Anmeldung: 26.03.2014
(73) Patentinhaber: Applied Chemicals Handels-GmbH, 1149 Wien (AT)
(72) Erfinder: KOZANDA, Christian, A-2873 Feistritz/Wechsel (AT); STRECKER, Dietmar, A-2603 Felixdorf (AT); KERN, Ewald, A-2361 Laxenburg (AT); ZABL, Manfred, A-1140 Wien (AT)
(74) Vertreter: Cunow, Gerda
(86) Internationale Anmeldenummer: PCT/AT2012/000135
(87) Internationale Veröffentlichungsnummer: WO 2012/171046

(56) Entgegenhaltungen:
- DE-A1- 2 923 646
- DE-A1-102005 057 591
- JP-A- 4 123 895
- JP-A- 2003 073 679
- RU-C1- 2 021 143
- US-A1- 2007 029 245
- US-B1- 6 615 710

## Beschreibung

Die vorliegende Erfindung bezieht sich auf eine Schneckenpresse, umfassend eine in einander gegenüberliegenden Rahmen drehbar gelagerte Schneckenwelle, welche zwischen einer Einlauföffnung für Rohflüssigkeit und einer Austragsöffnung für entwässertes Gut einen sich im wesentlichen konisch aufweitenden Durchmesser aufweist und auf welcher Schneckenwelle wenigstens ein sich mit im wesentlichen gleichbleibender Steigung erstreckendes Schraubenblatt angeordnet ist, wobei weiterhin in dem Rahmen ein die Schneckenwelle zylindrisch umgebendes, eine Vielzahl von Filteröffnungen aufweisendes Filtersieb angeordnet ist, wobei zusätzlich an der Außenseite des Filtersiebs eine eine Mehrzahl von Reinigungsdüsen aufweisende Reinigungsvorrichtung für das Filtersieb sowie eine unter dem Filtersieb angeordnete, trichterförmige Filtratwanne angeordnet sind.

Aus Industriekläranlagen, kommunalen Kläranlagen sowie aus verschiedensten verfahrenstechnischen Prozessen anfallende Schlämme müssen vor ihrer Entsorgung bzw. Endverwertung entwässert werden, um in späterer Folge verwertbar zu sein. Diese Verwertung betrifft beispielsweise die Verbrennung, Kompostierung oder auch Abgabe an die Landwirtschaft. Hierbei haben es in der Vergangenheit die steigenden Transportkosten bei der Schlammentsorgung erforderlich gemacht, dass die anfallenden Schlämme auf einen hohen Endfeststoffgehalt entwässert werden müssen, um für die nachfolgende Verwertungen wieder einsetzbar zu sein. Dafür wurden zu den verschiedensten Schlämmen polymere Koagulations- bzw. Flockungshilfsmittel zugesetzt, um einen Schlamm mit Flocken auszubilden, welcher in der Folge leichter entwässerbar wird.

Für die kontinuierliche Entwässerung wird hierbei der Schlamm samt dem Flockungshilfsmittel auf eine Schneckenpresse von einer Eintragsseite aufgebracht und kontinuierlich durch Fördern des Schlamms durch die Presse und Erhöhen des Entwässerungsdrucks bis zu dem gewünschten Trocknungs- bzw. Entwässerungsgrad des Schlamms entwässert. Da bei einer derartigen Schneckenpresse auf der Seite der Einlauföffnung in die Presse die Feststoffkonzentration des Schlamms niedrig ist und kontinuierlich zur Austragsseite ansteigt, ist im Bereich der Einlauföffnung einerseits eine große Menge an Wasser unmittelbar auszutragen, welches Filtratwasser im Vergleich zu demjenigen Wasser, welches in Bereichen der Schneckenpresse, die weiter von der Einlauföffnung entfernt sind, üblicherweise nur wenig belastet ist und in welchem nur äußerst geringe Mengen an Feststoffpartikeln mitgerissen sind. Trotz dieses bekannten Faktums, dass im Bereich der Einlauföffnung die meiste Menge an Filtratwasser anfällt, wird in den Schneckenpressen gemäß dem Stand der Technik das Filtratwasser in ein und derselben Filtratwanne bzw. einer Filtratwanne gesammelt, um in der Folge wieder in den Prozess, insbesondere in den Rohschlamm eingeleitet zu werden.

So sind beispielsweise Schneckenpressen bekannt, bei welchen die Schneckenwelle geneigt zur Waagrechten gelagert ist, insbesondere bei welchen die Einlaufseite im Vergleich zur Austragsseite der Schneckenwelle tiefer angeordnet ist, so dass durch die geneigte Anordnung der Schneckenwelle eine zusätzliche Förderung des Ablaufs von Filtratwasser in Richtung zur Einlaufseite erzwungen wird.

Weiterhin ist beispielsweise aus der EP-B 1 148 990 eine Schneckenpresse bekannt, bei welcher eine Vorrichtung zur Verhinderung eines Verlegens der Filterzone an der Einlaufseite die Presse so ausgebildet ist, dass das Filterrohr bzw. das Filtersieb insbesondere an der Einlaufseite zu einer Drehung angetrieben ist, um einerseits ein Verlegen des Filtersiebs hintanzuhalten und andererseits einen sicheren Abtransport der übermäßigen Menge an Filtratwasser in diesem Bereich zu gewährleisten.

Aus der US 6,615,710 B1 ist eine Schneckenpresse gemäß dem Oberbegriff des Hauptanspruchs bekannt geworden, welcher unter einer sich konisch über die gesamte Länge der Schneckenpresse erstreckenden Schneckenwelle, in welcher überdies eine Einlauföffnung für Rohflüssigkeit vorgesehen ist, eine Mehrzahl von Filtratwannen vorgesehen ist. Die erste Filtratwanne ist hierbei im Bereich der Einlauföffnung für Rohflüssigkeit vorgesehen und weist eine geringere Längserstreckung als die zweite Filtratwanne auf.

Aus der RU 2 021 143 C1 ist eine Fruchtpresse mit einer Schneckenwelle bekannt geworden, deren Schneckenwelle im Bereich einer Aufgabeöffnung zylindrisch ausgebildet ist und in welchem Bereich zusätzlich ein weiterer Ablauf für unmittelbar ablaufenden Fruchtsaft vorgesehen ist.

Der DE 10 2005 057 591 A1 ist eine Reinigungsvorrichtung zum Entfernen von Feststoffen aus einer Flüssigkeit, insbesondere für einen Kühlschmierstoffkreislauf bekannt geworden, bei welchem ein zylindrischer Filterkörper eine sich in einem Mittelbereich konisch erweiternde Schneckenwelle sowie in einem Einlauf- und Auflaufbereich zylindrisch erstreckende Schneckenwelle aufweist.

Weiterhin wurden bereits verschiedenste Schneckenpressen vorgesehen, in welchen die Maschenweite des Filtersiebs variabel anpassbar ist, um an den Entwässerungsgrad des Filterguts angepasst zu sein und den Austrag der anfallenden Mengen an Filtrat im Einlaufbereich der Filterpresse mit Sicherheit bewältigen zu können, wobei es allen bekannten Schneckenpressen gemeinsam ist, dass zwar auf eine möglichst vollständige und effiziente Entwässerung des Filterschlamms Wert gelegt wird, jedoch das anfallende Filtrat in jedem Fall unabhängig von seiner Zusammensetzung unmittelbar wieder in dem Prozess rückgeführt bzw. verworfen wird, ohne dass versucht wird, die Gesamtenergiebilanz der Schneckenpresse zu verbessern bzw. das Filtrat einer unmittelbaren Weiterverwendung zuzuführen.

Das Dokument DE 2 923 646 -A1 beschreibt eine Schneckenpresse gemäss dem Oberbegriff des Anspruchs 1.

Die vorliegende Erfindung zielt nun darauf ab, eine Schneckenpresse der eingangs genannten Art zur Verfügung zu stellen, mit welcher es gelingt, nicht nur zu entwässernden Schlamm bzw. Rohflüssigkeit sicher und zuverlässig zu entwässern, sondern gleichzeitig das anfallende Filtrat so aufzutrennen, dass es einerseits unmittelbar dem Prozess rückgeführt wird und andererseits jene Filtratmengen, welche für andere Einsatzzwecke verwendet werden können, ohne weitere Reinigung bzw. Bearbeitung direkt aus dem Prozess abzuleiten und weiter zu verwenden.

Diese Aufgabe wird durch eine Schneckenpresse mit den Merkmalen des Anspruchs 1 gelöst.

Dadurch, dass die Schneckenwelle im Bereich der Einlauföffnung für Rohflüssigkeit zylindrisch ausgebildet ist, gelingt es, einen großen Teil der in diesem Bereich anfallenden, übergroßen Menge an Flüssigkeit unmittelbar aus dem Filter bzw. der Schneckenpresse ablaufen zu lassen, ohne dass in diesem Bereich bereits eine Druckerhöhung durch eine Änderung des Durchmessers der Schneckenwelle bzw. eine sich ändernde Steigung der Schraubenblätter auf die eingetragene Rohflüssigkeit aufgebracht wird, zu erzielen. Durch die konische Ausbildung der Schneckenwelle im Mittelbereich der Schneckenpresse wird kontinuierlich der Druck auf die zu filtrierende bzw. zu entwässernde Rohflüssigkeit bzw. den zu entwässernden Schlamm erhöht und somit wird der Entwässerungsgrad kontinuierlich erhöht. Indem der Endbereich der Schneckenwelle wiederum zylindrisch ausgebildet ist, wird in jenem Bereich der Schneckenpresse, wo der größte Teil der Flüssigkeit bereits abgefiltert ist, und ein nahezu vollständig entwässerter Filterkuchen vorliegt, der Druck durch Änderung des Durchmessers der Schneckenwelle bzw. durch Änderung der Steigung der Schraubenblätter nicht weiter erhöht, sondern lediglich ein Austrag des im Wesentlichen festen Filterkuchens gewährleistet.

Durch eine derartige Ausbildung der Schneckenwelle wird sichergestellt, dass das in dem ersten zylindrischen Bereich anfallende Filtratwasser aufgrund der im wesentlichen drucklosen Führung der Rohflüssigkeit in diesem Bereich der Schneckenpresse nahezu frei von mitgerissenen Feststoffanteilen durch die Öffnungen des Filtersiebs in die in diesem Bereich der Schneckenpresse mit einer gesonderten, ersten Kammer ausgebildeten Filtratwanne abfließt. Dadurch kann das in diesem Bereich anfallende Filtratwasser unmittelbar und ohne jede weitere Reinigung, Filtrierung oder sonstige Behandlung aus dem System, d.h. aus dem zu entwässernden Schlamm, aber auch dem restlichen, noch enthaltenen Filtratwasser abgetrennt werden und unmittelbar einer Weiterverwendung zugeführt werden.

Dadurch, dass der Ablauf der ersten Kammer im Bereich der Einlauföffnung über eine Rücklaufleitung für Filtrat mit der Reinigungsvorrichtung für das Filtersieb zur Kreislaufführung des Filtrats verbunden ist, gelingt es mit einer derartigen Ausbildung einerseits einen im Wesentlichen geschlossen Flüssigkeitskreislauf im Inneren der Schneckenpresse auszubilden, wodurch nicht nur die Zufuhr von Frischwasser drastisch herabgesetzt werden kann, sondern die Gesamtenergiebilanz der Schneckenpresse deutlich verbessert werden kann, da die Menge von in das Verfahren rückgeführtem, mit Schwebstoffen bzw. -partikeln belasteten Filtrat deutlich herabgesetzt werden kann. Weiters ist die gesamte Menge an zu reinigendem Wasser bzw. der Rohflüssigkeit wieder zuzuführenden Mengen deutlich herabgesetzt und somit die Energiebilanz der gesamten Schneckenpresse deutlich verbessert.

Indem, wie dies in einer Weiterbildung der vorliegenden Erfindung entspricht, die Unterteilung bzw. Kammerung der Filtratwanne so ausgebildet ist, dass die Kammer im Bereich der Einlauföffnung eine Längserstreckung von 10 % bis 35 %, insbesondere 15 % bis 25 % der Länge der Schneckenwelle aufweist, wird sichergestellt, dass nahezu reines Filtratwasser, welches im Wesentlichen frei von Schwebstoffen und mitgerissenen Feststoffpartikeln ist, im Bereich der Kammer unter der Einlauföffnung die Schneckenpresse gesammelt wird und zusätzlich eine Nachbehandlung dieses Filtrats vor seiner Wiederverwertung hintangehalten werden kann, wodurch sich nicht nur eine apparative Vereinfachung der Vorrichtung ergibt, sondern insbesondere deren Gesamtenergiebilanz aufgrund der verringerten Menge an zu behandelnden Filtratwasser deutlich verbessert werden kann.

Indem, wie dies einer Weiterbildung der vorliegenden Erfindung entspricht, die Vorrichtung so weitergebildet ist, dass in der Rücklaufleitung eine Pumpvorrichtung sowie eine Steuer- bzw. Regelvorrichtung und ein direkter Ablauf vorgesehen sind, kann eine insbesondere rasche und zuverlässige Zufuhr des unbelasteten Filtratwassers zu der Reinigungsvorrichtung bzw. zu den Düsen der Reinigungsvorrichtung mit entsprechend eingestelltem Zufuhrdruck gewährleistet werden. Überschüssiges Filtratwasser kann hierbei, sofern dies erforderlich ist, unmittelbar über den Ablauf abgeleitet werden, wodurch die Gesamtmenge an zuzuführendem Filtratwasser drastisch herabgesetzt wird.

Um bei Anfall von übermäßigen Mengen an Filtratwasser im Bereich der ersten Kammer der Filtratwanne einen Flüssigkeitsstau mit Sicherheit zu vermeiden und einen kontinuierlichen Betrieb zu gewährleisten, ist die Erfindung bevorzugt so weitergebildet, dass zusätzlich ein Überlauf von der ersten Kammer im Bereich der Einlauföffnung zur wenigstens einen weiteren Kammer im Bereich der Auslauföffnung vorgesehen ist. Bei Vorsehen eines derartigen Überlaufs wird nicht nur ein Flüssigkeitsstau in der ersten Kammer mit Sicherheit hintangehalten, sondern weiterhin gewährleistet, dass bei einer übermäßigen Entwässerung in dem ersten Teil der Schneckenpresse auch ausreichend Flüssigkeit, insbesondere ausreichend Filtrat für eine Rückführung in die Rohflüssigkeit zur Verfügung steht, um die Rohflüssigkeit mit der korrekten und gewünschten Konsistenz, insbesondere mit einem im wesentlichen gleichbleibenden Feststoffgehalt auf der Einlaufseite aufgeben zu können, wodurch nicht nur eine kontinuierliche Betriebsweise der gesamten Schneckenpresse gewährleistet wird, sondern auch eine insgesamt wartungsarme Vorrichtung zur Verfügung gestellt werden kann.

Für die Gewährleistung eines derartigen kontinuierlichen Betriebs der Vorrichtung ist die Erfindung bevorzugt so weitergebildet, dass der Ablauf der wenigstens einen weiteren Kammer im Bereich der Auslauföffnung über eine Rückführungsvorrichtung mit einem Zulauf, insbesondere einer Zufuhrpumpe für einen Eintrag von Rohflüssigkeit verbunden ist. Indem der Ablauf der wenigstens einen weiteren Kammer im Bereich der Auslauföffnung über eine Rückführvorrichtung mit einem Zulauf, insbesondere einer Zufuhrpumpe für einen Eintrag von Rohflüssigkeit verbunden ist, wird nicht nur das stark mit Schwebstoffen bzw. -partikeln belastete Filtrat unmittelbar dem Prozess rückgeführt, um neuerlich entwässert und somit von mitgerissenem Schlammpartikeln befreit zu werden, sondern zusätzlich ein möglichst gleichbleibendes Verhältnis zwischen Flüssigkeit und Feststoffpartikeln in der Rohflüssigkeit eingestellt, wodurch ein gleichmäßiger, kontinuierlicher Betrieb der gesamten Anlage gewährleistet werden kann, ohne dass beispielsweise durch Änderung der Geschwindigkeit der Schnecke oder dgl. auf sich ändernde Prozessparameter eingegangen werden muss, so dass insgesamt ein kontinuierlicher und über längere Zeit gleichbleibender und somit energieeffizient zu führender Betrieb gewährleistet werden kann.

Dadurch, dass auch die Rückführungsvorrichtung in dem Ablauf der wenigstens einen weiteren Kammer mit einer Pumpe, einer Steuer- bzw. Regelvorrichtung und einer Rückführleitung in den Zulauf für Rohflüssigkeit und einem direkten Ablauf versehen ist, gelingt es je nach Prozessparametern die Anlage unmittelbar und ohne Änderungen der gesamten Betriebsparameter an die jeweiligen Erfordernisse anzupassen und insbesondere durch das Vorsehen der Steuer- bzw. Regelvorrichtung, z.B. von einem Regelventil, ein möglichst gleichbleibendes Verhältnis zwischen Flüssigkeit in Feststoffpartikeln in der einzutragenden Rohflüssigkeit einzustellen, so dass die gesamte Schneckenpresse über eine lange Zeit kontinuierlich betrieben werden kann, wodurch sich die Gesamteffizient und insbesondere die Energiebilanz der Anlage weiter verbessert.

Um insbesondere den hohen Flüssigkeitsanfall im Einlaufbereich der Schneckenpresse sicher und zuverlässig abzuleiten, ohne gleichzeitig größere Mengen an Feststoffpartikeln mit dem Filtrat mitzureißen, ist gemäß einer bevorzugten Weiterbildung der Erfindung die Schneckenpresse so ausgebildet, dass das Filtersieb im Bereich der ersten Kammer mit Langlöchern mit halbkreisförmigen Endbereichen und im Bereich der wenigstens einen weiteren Kammer mit runden Löchern ausgebildet ist. Durch Vorsehen von zwei unterschiedlichen Lochungen in dem Filtersieb wird einerseits im Einlaufbereich dem übermäßigen Flüssigkeitsanfall Rechnung getragen und andererseits jedoch durch Vorsehen von Langlöchern mit halbkreisförmigen Endbereichen ein Filtersieb zur Verfügung gestellt, welches einerseits gegen einen übermäßigen Verschleiß durch die spezielle Lochform gesichert ist und andererseits sicherstellt, dass nicht übermäßige Mengen an Feststoffpartikeln bzw. besonders große Feststoffpartikel mit dem Filtrat mitgerissen werden.

Indem, wie dies einer bevorzugten Weiterbildung der Erfindung entspricht, die Längserstreckung der Langlöcher 1,5 bis 3 Mal dem Durchmesser der runden Löcher entspricht, gelingt es, die übermäßigen Flüssigkeitsmengen im Bereich der Einlauföffnung sicher und zuverlässig abzutransportieren, ohne jedoch den Durchtritt von größeren Mengen an Feststoffpartikeln zu ermöglichen. Im Vergleich zu beispielsweise dem Vorsehen von runden Löchern mit größerem Durchmesser wird durch die Ausbildung von Langlöchern ein unmittelbares Mitreißen von Partikeln hintangehalten, da die üblicherweise im Wesentlichen kugelförmige Partikel- bzw. Schlammflocken an den Rändern der Langlöcher mit Sicherheit zurückgehalten werden und nicht durch Löcher mit einem vergrößertem Durchmesser ausgetragen werden.

Um eine insbesondere vollständige Reinigung des Filtersiebs zu gewährleisten und insbesondere ein Verlegen der Durchtrittslöcher des Filtersiebs mit Sicherheit hintanzuhalten, ist die Erfindung dahingehend weitergebildet, dass die Reinigungsvorrichtung für das Filtersieb als wenigstens ein Sprühdüsen aufweisender, bewegbar gelagerter Düsenstock ausgebildet ist, und dass die Sprühdüsen des Düsenstocks mit sich änderndem Flüssigkeitsdruck einer zumindest teilweise Filtrat aus der ersten Kammer der Filtratwanne enthaltenden Reinigungsflüssigkeit beaufschlagbar sind. Da die Reinigungsvorrichtung als wenigstens ein Sprühdüsen aufweisender, bewegbar gelagerter Düsenstock ausgebildet ist und die Sprühdüsen des Düsenstocks mit sich änderndem Flüssigkeitsdruck einer zumindest teilweise Filtrat und aus der ersten Kammer der Filterwanne enthaltenden bzw. daraus bestehenden Reinigungsflüssigkeit beaufschlagbar sind, gelingt es, die Reinigung des Filtersiebs in Abhängigkeit von dem Verschmutzungsgrad desselben zu steuern bzw. zu regeln, insbesondere indem beispielsweise in dem Bereich der Schneckenwelle, in welchem sich diese konisch erweitert, der Flüssigkeitsdruck auf die Sprühdüsen kontinuierlich erhöht wird, um ein Verlegen zu verhindern bzw. bereits verlegte Filterdüsen mit Sicherheit wiederum zu öffnen bzw. zu reinigen. Indem der Düsenstock darüber hinaus bewegbar gelagert ist, gelingt es über eine entsprechende Steuerung bzw. Regelung auch jene Bereiche, in welchen beispielsweise eine Verlegung bereits erfolgt ist, gezielt mit Reinigungsflüssigkeit zu beaufschlagen, um sie wieder durchgängig zu machen.

Indem, wie dies einer bevorzugten Weiterbildung der vorliegenden Erfindung entspricht, die Vorrichtung so weitergebildet ist, dass der Düsenstock der Reinigungsvorrichtung im Wesentlichen den gesamten Umfang des Filtersiebs umgreift und zu einer hin und hergehenden, im Wesentlichen die gesamte Längserstreckung des Filtersiebs überstreichenden Bewegung antreibbar ist, kann insbesondere in demjenigen Bereich des Filtersiebs, in welchem ein übermäßiges Verlegen der Sieblöcher zu befürchten ist, einerseits die Geschwindigkeit der Reinigungsvorrichtung bei ihrer hin- und hergehenden Bewegung erhöht werden und andererseits auch die Verweilzeit des Düsenstocks in diesem Bereich erhöht werden, so dass beispielsweise, derjenige Bereich des Filtersiebs, in welchem ein Verlegen des Filtersiebs nicht zu befürchten ist, weniger häufig von dem Düsenstock überstrichen wird als jene Bereiche, in welchen ein Verlegen befürchtet werden muss. Indem im Wesentlichen das gesamte Filtersieb durch den Düsenstock umgriffen wird, wird auch eine gleichzeitige Reinigung von allen gegebenenfalls von Verlegungen betroffenen Bereichen der Siebtrommel bzw. des Filtersiebs gewährleistet und es gelingt somit einen kontinuierlichen Betrieb der Schneckenpresse aufrechtzuerhalten, ohne dass es aufgrund von einem Verlegen der Durchtrittslöcher der Siebtrommel erforderlich wäre, Abschaltungen bzw. gesonderte Reinigungsläufe für die Siebtrommel durchzuführen.

Um eine insbesondere rasche und zuverlässige Entwässerung der Rohflüssigkeit im Einlaufbereich der Siebtrommel und insbesondere einen Austrag des im Wesentlichen unbelasteten Filtratwassers in diesem Bereich sicherzustellen, ist gemäß einer bevorzugten Weiterbildung der Erfindung die Schneckenpresse so weitergebildet, dass die Schneckenwelle zumindest im zylindrisch ausgebildeten Bereich nahe der Einlauföffnung, vorzugsweise etwa im Bereich der Längserstreckung der ersten Kammer im Bereich der Einlauföffnung zwei einen einander gegenüberliegenden Ausgangspunkt aufweisende Schraubenblätter mit gleicher Steigung aufweist.

Die Erfindung wird nachfolgend anhand von in der Zeichnung dargestellten Ausführungsbeispielen näher erläutert. In diesen zeigen:
Fig. 1 einen Längsschnitt durch eine erfindungsgemäße Schneckenpresse mit einer zwei Kammern aufweisenden Filterwanne gemäß dem Stand der Technik, und
Fig. 2 einen Längsschnitt durch eine abgewandelte Ausbildung gemäß der Erfindung der Schneckenpresse gemäß Fig. 1, und
Fig. 3 einen Längsschnitt durch die Schneckenpresse gemäß Fig. 1 mit abgewandelter Ausbildung eines Filtratrücklaufs.

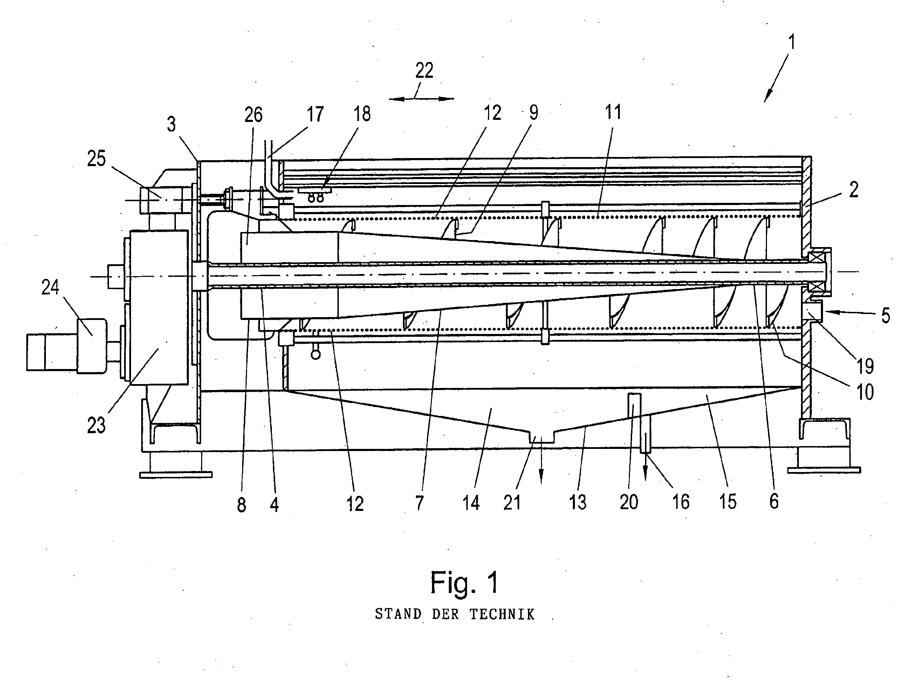

In Fig. 1 ist die allgemein mit 1 bezeichnete Schneckenpresse im Längsschnitt dargestellt, in deren Zentrum eine drehbar in einem Rahmen 2 und 3 gelagerte Schneckenwelle 4 ausgebildet ist. Die Schneckenwelle 4 ist hierbei so ausgebildet, dass sie auf der Einlaufseite 5 der Schneckenpresse 1 einen gleichbleibenden, zylindrischen Durchmesser 6 aufweist, welcher sich in einem mittleren Bereich der Schneckenpresse 1 als Konus 7 aufweitet, um in einem zu einer Auswurfseite gerichteten Endbereich 8 wiederum zylindrisch ausgebildet ist. Auf der Schneckenwelle 4 ist ein sich mit gleichbleibender Steigung über die gesamte Länge der Schneckenwelle 4 erstreckendes Schraubenblatt 9 angeordnet, wobei insbesondere im Einlaufbereich 5 der Schneckenpresse 1 ein zweites Schraubenblatt 10 angeordnet ist, welches ebenfalls dieselbe Steigung aufweist, jedoch einen gegenüber dem ersten Schraubenblatt 9 gegenüberliegenden Ausgangspunkt aufweist, so dass in dem Einlaufbereich 5 für eine zuverlässigere Weiterförderung der eingetragenen Rohflüssigkeit als auch eine Entwässerung derselben Sorge getragen ist.

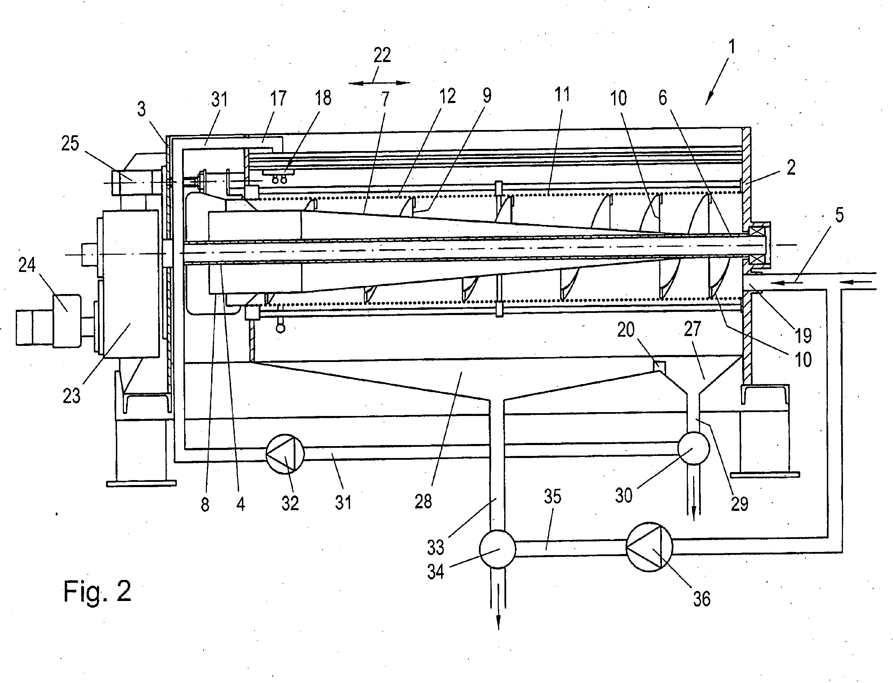

Die Schneckenpresse 1 weist weiterhin ein die Schneckenwelle 4 zylindrisch umgebendes Filtersieb bzw. eine Filtertrommel 11 auf, welches Filtersieb bzw. welche Filtertrommel 11 eine Vielzahl von Filteröffnungen 12 aufweist, durch welche Filteröffnungen 12 das Filtrat in Richtung nach außen und insbesondere in die Filtratwanne 13 ausgetragen wird. Die Filtratwanne 13 ist bei der Darstellung gemäß Fig. 2 mit zwei Kammern 14 und 15 ausgebildet, wobei die in Richtung zur Einlaufseite 5 der Schneckenpresse 1 gelagerte Filtratkammer 15 einen direkten Ablauf 16 aufweist, durch welchen im Wesentlichen unbelastetes Filtrat unmittelbar aus dem System ausgetragen bzw. über eine in Fig. 1 nicht näher dargestellte Rückführvorrichtung in eine schematisch dargestellte Zufuhrleitung 17 einer Reinigungsvorrichtung 18 für das Filtersieb 11 zugeführt wird. Die Filtratwanne 15 ist hierbei so ausgebildet, dass ihre Längserstreckung im Wesentlichen gleich jener des Bereichs der Schneckenwelle 4 ist, in welcher diese einerseits zwei Schraubenblätter 9, 10 aufweist und andererseits im Wesentlichen zylindrisch 6 ausgebildet ist. In diesem Bereich der Schneckenwelle 4 wird das dünnflüssige zu entwässernde Gut bei 19 aufgegeben und aufgrund der hohen Flüssigkeitsfracht der Rohflüssigkeit läuft in den ersten 10 % bis 30 % der Längserstreckung der Schneckenpresse im Wesentlichen reines Filtrat durch das Filtersieb ab, ohne dass ein Pressdruck oder eine übermäßige Beaufschlagung der Rohflüssigkeit erforderlich wäre. Das in diesem Bereich ablaufende Filtrat ist nahezu von Schwebstoffen frei, so dass es einer weiteren Verwendung zugeführt werden kann.

Um mit Sicherheit die gesamte große, in diesem Bereich anfallende Flüssigkeitsmenge handhaben zu können, ist hierbei zwischen der Kammer 15 und der Kammer 16 der Filtratwanne 13 ein Wehr 20 vorgesehen, welches Wehr 20 als Überlauf dient, so dass bei einem übermäßigen Flüssigkeitsanfall unmittelbar die Überschussflüssigkeit in die zweite, üblicherweise größer ausgebildete Kammer 14 der Filtratwanne 13 eingeleitet werden kann. Die zweite Kammer 14 der Filtratwanne 13 weist hierbei ebenfalls einen Ablauf 21 auf, über welchen Ablauf 21 mit Schwebstoffen belastetes Filtrat ausgetragen wird, Dieses Filtrat kann hierbei beispielsweise unmittelbar wieder der Rohflüssigkeit zugemischt werden und über den Eintrag 19 neuerlich in die Schneckenpresse 1 eingetragen werden. Eine derartige partielle bzw. teilweise Rückführung von stärker belastetem Filtrat hat hierbei einerseits den Vorteil, dass mit dieser Flüssigkeit die Rohflüssigkeit auf eine definierte Konsistenz eingestellt werden kann und andererseits die Gesamtmenge an aufzureinigendem, belasteten Filtrat deutlich herabgesetzt werden kann.

Lediglich schematisch ist Fig. 1 die Reinigungsvorrichtung 18 für das Filtersieb 11 entnehmbar, wobei die Reinigungsvorrichtung 18 hierbei so ausgebildet ist, dass sie einen die Siebtrommel 1 im Wesentlichen umgreifenden Düsenstock 18 aufweist, mit welchem Düsenstock 18 die Filterdüsen durch Verschieben bzw. Bewegen der Reinigungsvorrichtung 8 in Längsrichtung der Schneckenpresse 1 gemäß dem Pfeil 22 gereinigt wird. Die Düsen sind hierbei den Umfang des Filtersiebs 11 im Wesentlichen vollständig umgebend auf der Reinigungsvorrichtung 18 angeordnet.

Lediglich der Vollständigkeit halber wird festgehalten, dass der Antrieb für die Schneckenwelle 4 in der Darstellung gemäß Fig. 1 ein Getriebe 23 und einen Motor 24 aufweist, und dass ein weiterer Motor 25 vorgesehen ist, welcher die Offen- und Schließvorrichtung sowie eine Verstellung einer Austragsöffnung 26 für einen Filterkuchen antreibt.

In der Darstellung gemäß Fig. 2 sind die Bezugszeichen von Fig. 1 im Wesentlichen beibehalten und es werden lediglich jene Teile der Vorrichtung neuerlich beschrieben, welche von Fig. 1 abweichen.

Bei der Darstellung von Fig. 2 ist im Wesentlichen die Filtratwanne 13 von jener von Fig. 1 unterschiedlich ausgebildet. Die Filtratwanne 13 gemäß Fig. 2 weist hierbei zwei Wannenbereiche bzw. -kammern 27 und 28 auf, wobei wiederum analog zu der Darstellung von Fig. 1 die beiden Wannen 27 und 28 durch ein Wehr 20 getrennt sind, welches Wehr als Überlauf für überschüssiges Filtrat aus der Filtratwanne 27 in die Filtratwanne 28 gedacht ist.

Der Ablauf 29 der Filtratwanne 27 ist hierbei mit einem Wegeventil 30 versehen, über welches Wegeventil 30 entweder das Filtrat aus dem System ausgetragen werden kann oder über eine Rücklaufleitung 31, in welcher eine Pumpe 32 vorgesehen ist, der Reinigungsvorrichtung 18 zugeführt werden kann, um wiederum als Reinigungsflüssigkeit für das Filtersieb 11 zu dienen.

Die Pumpe 32 ist hierbei insbesondere von Bedeutung, um den Zufuhrdruck zu den Düsen der Vorrichtung 18 entsprechend steuern bzw. regeln zu können, um in Abhängigkeit von dem Verschmutzungsgrad des Filtersiebs 11 einen mehr oder weniger hohen Reinigungsdruck auf das Filtersieb 11 aufbringen zu können. Hierbei kann selbstverständlich der Flüssigkeitsdruck auf die Düsen der Reinigungsvorrichtung 18 auch in Abhängigkeit der Position der Reinigungsvorrichtung 18 über das Filtersieb und somit in Abhängigkeit von der Verschmutzung bzw. Verlegung desselben (Richtung des Pfeils 22) verändert werden, so dass beispielsweise am Austragsende der Schneckenpresse 1 ein höherer Reinigungsdruck als am Einlaufende 5 derselben aufgebracht werden kann.

Auch die zweite Filtratwanne 28 ist gemäß der Ausbildung von Fig. 2 mit einem direkten Ablauf 33 versehen, in welchen ebenfalls ein Ventil 34 vorgesehen ist, um das beladene Filtrat entweder wiederum zu dem Eintrag 19 für Rohflüssigkeit rückzuführen oder aber aus dem System auszutragen und einer gesonderten Reinigungsvorrichtung zuzuführen.

In der Rücklaufleitung 35 für das Filtrat zu dem Eintrag 19 für Rohflüssigkeit ist wiederum eine Pumpe 36 vorgesehen, welche jedoch abweichend von der Pumpe 32 lediglich für das Aufrechterhalten von einem (einer) gleichbleibenden Zufuhrdruck bzw. Zufuhrmenge an mit Schwebstoffen bzw. Abfallstoffen beladenem Filtrat zu dem Eintrag 19 für Rohflüssigkeit vorgesehen ist.

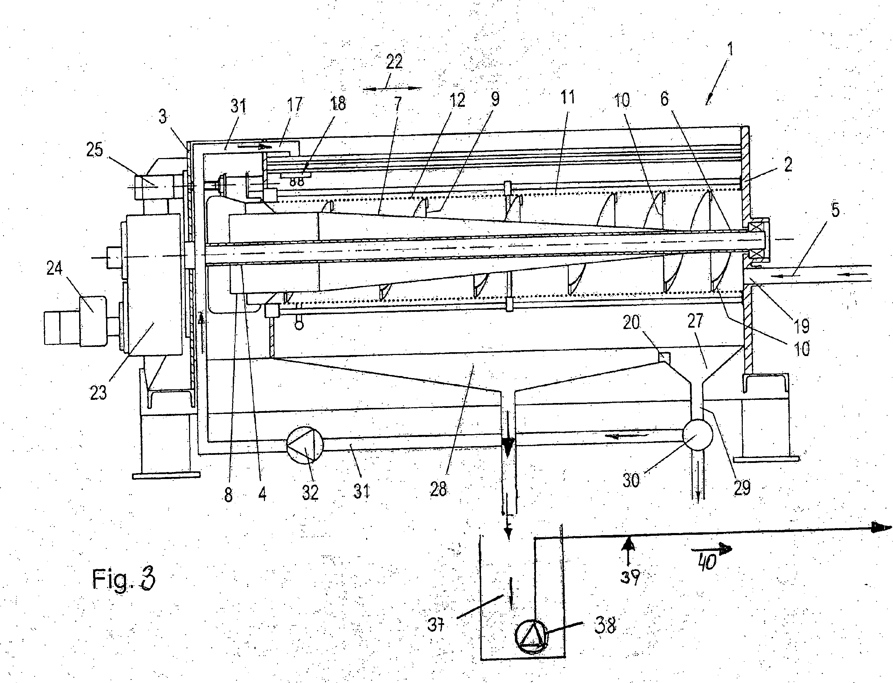

Fig. 3, in welcher die gesamte Schneckenpresse ebenso wie die Ablaufvorrichtung im Wesentlichen, wie in Fig. 2 ausgebildet ist, unterscheidet sich von Fig. 2 dadurch, dass das in der zweiten Filtratwanne 28 gesammelte Filtrat, welches stärker mit Abfallstoffen belastet ist, über den Ablauf 33 in einen Vorratstank 37 eingeleitet wird. In dem Vorratstank ist weiterhin eine Pumpe 38 angeordnet, welche Ablaufflüssigkeit von dem Vorratstank 37 in Richtung des Pfeils 40 zu einer nicht dargestellten Beschickungsleitung für die Schneckenpresse zuführt. In dieser Zulaufleitung ist es auch möglich, weitere Einrichtungen zu positionieren, wie eine Durchflussmessung, Dosierungseinrichtungen für weitere gegebenenfalls erforderliche Substanzen sowie gegebenenfalls weitere Messfühler.

Selbstverständlich sind auch Kombinationen der Varianten der Fig. 2 und Fig. 3 beispielsweise mit einem Vorratstank und einem Dreiwegeventil möglich, ohne den Rahmen der vorliegenden Erfindung zu verlassen. Weiterhin können weitere Eintragsvorrichtungen für beispielsweise Zusatzstoffe für das zu reinigenden Abwasser, wie beispielsweise Flockungshilfsmittel oder dgl. vorgesehen sein.

Insgesamt gelingt es somit, mit einer Vorrichtung gemäß der vorliegenden Erfindung, die während eines Filterprozesses ausgetragenen Abfallflüssigkeiten soweit als möglich wiederzuverwerten, so dass die gesamte Flüssigkeitsabfallmenge deutlich herabgesetzt wird und überdies aufgrund der Kreislaufführung des Filtrats die gesamte Energiebilanz und insbesondere auch die Bilanz des einzusetzenden Frischwassers deutlich gegenüber herkömmlichen Anlagen verbessert ist.

## Patentansprüche

1. Schneckenpresse (1), umfassend eine in einander gegenüberliegenden Rahmen drehbar gelagerte Schneckenwelle (4), welche zwischen einer Einlauföffnung (19) für Rohflüssigkeit und einer Austragsöffnung für entwässertes Gut einen sich im Wesentlichen konisch aufweitenden Durchmesser aufweist und auf welcher Schneckenwelle (4) wenigstens ein sich mit im Wesentlichen gleichbleibender Steigung erstreckendes Schraubenblatt (9, 10) angeordnet ist, wobei weiterhin in dem Rahmen (2, 3) ein die Schneckenwelle (4) zylindrisch umgebendes, eine Vielzahl von Filteröffnungen aufweisendes Filtersieb (11) angeordnet ist, wobei zusätzlich an der Außenseite des Filtersiebs (11) eine eine Mehrzahl von Reinigungsdüsen aufweisende Reinigungsvorrichtung (18) für das Filtersieb sowie eine unter dem Filtersieb (11) angeordnete, trichterförmige Filtratwanne (13) angeordnet sind, wobei die Schneckenwelle (4) im Bereich der Einlauföffnung (19) für Rohflüssigkeit zylindrisch (6), in einem Mittelbereich der Schneckenpresse (1) sich konisch (7) in Richtung zur Austragsöffnung erweiternd und im Bereich der Austragsöffnung zylindrisch (8) ausgebildet ist, und wobei die unter dem Filtersieb (11) angeordnete Filtratwanne (13) mit wenigstens zwei Kammern (14, 15, 27, 28) bzw. zwei voneinander getrennten Bereichen ausgebildet ist, welche zwei Kammern (14, 15, 27, 28) mit jeweils einem Ablauf (29, 33) für Filtrat versehen sind, **dadurch gekennzeichnet, dass** die erste Kammer (15, 27) im Bereich der Einlauföffnung (19) eine Längserstreckung aufweist, welche wenigstens der Länge des zylindrisch ausgebildeten Bereichs (6) der Schneckenwelle (4) im Bereich der Einlauföffnung (19) für Rohflüssigkeit entspricht, und dass der Ablauf (16) der ersten Kammer (15, 27) im Bereich der Einlauföffnung über eine Rücklaufleitung (31) für Filtrat mit der Reinigungsvorrichtung für das Filtersieb (11) zur Kreislaufführung des Filtrats verbunden ist.

2. Schneckenpresse nach Anspruch 1, **dadurch gekennzeichnet, dass** die Kammer (15, 27) im Bereich der Einlauföffnung (19) eine Längserstreckung von 10 % bis 35 %, insbesondere 15 % bis 25 % der Länge der Schneckenwelle (1) aufweist.

3. Schneckenpresse nach Anspruch 1 oder 2, **dadurch gekennzeichnet, dass** in der Rücklaufleitung (31) eine Pumpvorrichtung (32) sowie eine Steuer- bzw. Regelvorrichtung (30) und ein direkter Ablauf (16) vorgesehen sind.

4. Schneckenpresse nach Anspruch 1, 2 oder 3, **dadurch gekennzeichnet, dass** zusätzlich ein Überlauf (20) von der ersten Kammer (15, 27) im Bereich der Einlauföffnung (19) zur wenigstens einen weiteren Kammer (14, 28) im Bereich der Auslauföffnung vorgesehen ist.

5. Schneckenpresse nach einem der Ansprüche 1 bis 4, **dadurch gekennzeichnet, dass** der Ablauf (33) der wenigstens einen weiteren Kammer (14, 28) im Bereich der Auslauföffnung über eine Rückführungsvorrichtung (38) mit einem Zulauf, insbesondere einer Zufuhrpumpe (36) für einen Eintrag von Rohflüssigkeit verbunden ist.

6. Schneckenpresse nach Anspruch 5 **dadurch gekennzeichnet, dass** die Rückführungsvorrichtung mit einer Pumpe (36), einer Steuer- bzw. Regelvorrichtung (34) sowie einer Rückführleitung (35) in den Zulauf (19) für Rohflüssigkeit und einem direkten Ablauf versehen ist.

7. Schneckenpresse nach einem der Ansprüche 1 bis 6, **dadurch gekennzeichnet, dass** das Filtersieb (4) m Bereich der ersten Kammer (15) mit Langlöchern mit halbkreisförmigen Endbereichen und im Bereich der wenigstens einen weiteren Kammer (14) mit runden Löchern ausgebildet ist.

8. Schneckenpresse nach Anspruch 7, **dadurch gekennzeichnet, dass** die Längserstreckung der Langlöcher etwa 1,5 bis 3 Mal dem Durchmesser der runden Löcher entspricht.

9. Schneckenpresse nach einem der Ansprüche 1 bis 8, **dadurch gekennzeichnet, dass** die Reinigungsvorrichtung (18) für das Filtersieb (4) als wenigstens ein Sprühdüsen aufweisender, bewegbar gelagerter Düsenstock (18) ausgebildet ist, und dass die Sprühdüsen des Düsenstocks (18) mit sich änderndem Flüssigkeitsdruck einer zumindest teilweise Filtrat aus der ersten Kammer der Filtratwanne enthaltenden Reinigungsflüssigkeit beaufschlagbar sind.

10. Schneckenpresse nach Anspruch 9, **dadurch gekennzeichnet, dass** der Düsenstock der Reinigungsvorrichtung im Wesentlichen den gesamten Umfang des Filtersiebs (11) umgreift und zu einer hin und hergehenden, im Wesentlichen die gesamte Längserstreckung des Filtersiebs (11) überstreichenden Bewegung antreibbar ist.

11. Schneckenpresse nach einem der Ansprüche 1 bis 10, **dadurch gekennzeichnet, dass** die Schneckenwelle (4) zumindest im zylindrisch ausgebildeten Bereich (6) der Einlauföffnung (19), vorzugsweise etwa im Bereich der Längserstreckung der ersten Kammer (15) im Bereich der Einlauföffnung zwei einen einander gegenüberliegenden Ausgangspunkt aufweisende Schraubenblätter (9, 10) mit gleicher Steigung aufweist.

## Claims

1. A screw extruder (1) including a screw shaft (4) rotationally mounted in oppositely located frames, which screw shaft has a substantially conically widening diameter between a feed opening (19) for crude liquid and a discharge opening for dehydrated material, and on which screw shaft (4) at least one screw blade (9, 10) extending with a substantially uniform pitch is disposed, wherein a filter sieve (11) cylindrically surrounding the screw shaft (4) and having a plurality of filter openings is further arranged in said frame (2, 3), wherein a cleaning device (18) for the filter sieve, which includes a plurality of cleaning nozzles, and a funnel-shaped filtrate trough (13) disposed below the filter sieve (11) are additionally arranged on the outer side of the filter sieve (11) wherein the screw shaft (4) is configured to be cylindrical (6) in the region of the feed opening (19) for crude liquid, to conically (7) widen towards the discharge opening in a central region of the screw extruder (1), and to be cylindrical (8) in the region of the discharge opening, and whereby the filtrate trough (13) disposed below the filter sieve (11) is designed to comprise at least two chambers (14, 15, 27, 28), or two mutually separate regions, which two chambers (14, 15, 27, 28) are each provided with an outlet (29, 33) for filtrate, **characterized in that** the first chamber (15, 27) in the region of the feed opening (19) has a longitudinal extension at least corresponding to the length of the cylindrically configured region (6) of the screw shaft (4) in the region of the feed opening (19) for crude liquid and that the outlet (16) of the first chamber (15, 27) in the region of the feed opening is connected to the cleaning device for the filter sieve (11) via a return line (31) for filtrate.

2. A screw extruder according to claim 1, **characterized in that** the chamber (15, 27) in the region of the feed opening (19) has a longitudinal extension of 10% to 35%, in particular 15% to 25%, of the length of the screw shaft (4).

3. A screw extruder according to claim 1 or 2, **characterized in that** a pumping device (32) as well as a control device (30) and a direct outlet (16) are provided in the return line (31).

4. A screw extruder according to claim, 2 or 3, **characterized in that** an overflow (20) from the first chamber (15, 27) in the region of the feed opening (19) to the at least one further chamber (14, 28) in the region of the discharge opening is additionally provided.

5. A screw extruder according to any one of claims 1 to 4, **characterized in that** the outlet (33) of the at least one further chamber (14, 28) in the region of the discharge opening is connected, via a return device (38), to an intake, in particular a supply pump (36), for charging crude liquid.

6. A screw extruder according to claim 5, **characterized in that** the return device is provided with a pump (36), a control device (34), and a return line (35) into the crude liquid intake (19), as well as a direct outlet.

7. A screw extruder according to any one of claims 1 to 6, **characterized in that** the filter sieve (4) is provided with oblong holes having semicircular end regions in the region of the first chamber (15) and with round holes in the region of the at least one further chamber (14).

8. A screw extruder according to claim 7, **characterized in that** the longitudinal extension of the oblong holes is 1.5 to 3 times the diameter of the round holes.

9. A screw extruder according to any one of claims 1 to 8, **characterized in that** the cleaning device (18) for the filter sieve (4) is configured as at least one movably mounted nozzle assembly (18) including spraying nozzles, and that the spraying nozzles of the nozzle assembly (18) can be powered with a variable liquid pressure of a cleaning liquid at least partially containing filtrate from the first chamber of the filtrate trough.

10. A screw extruder according to claim 9, **characterized in that** the nozzle assembly of the cleaning device substantially encompasses the entire periphery of the filter sieve (11) and is capable of being driven to a reciprocating movement substantially sweeping the entire longitudinal extension of the filter sieve (11).

11. A screw extruder according to any one of claims 1 to 10, **characterized in that** the screw shaft (4) comprises two screw blades (9, 10) with identical pitches and oppositely located starting points at least in the cylindrically configured region (6) of the feed opening (19), preferably approximately in the region of the longitudinal extension of the first chamber (15) in the region of the feed opening.

## Revendications

1. Presse à vis (1), comprenant un arbre de vis (4) monté tournant dans des bâtis en vis-à-vis l'un de l'autre, lequel arbre présente, entre une ouverture d'admission (19) pour du liquide brut et une ouverture de décharge pour du produit déshydraté, un diamètre s'élargissant essentiellement en cône, et arbre (4) sur lequel est disposée au moins une pale d'hélice (9, 10) s'étendant avec un pas essentiellement constant, un tamis de filtre (11), qui entoure en forme de cylindre l'arbre de vis (4) et présente une multiplicité d'orifices de filtration, étant en outre disposé dans le bâti (2, 3), un dispositif de nettoyage (18) pour le tamis de filtre, pourvu d'une pluralité de buses de nettoyage, étant disposé en supplément sur le côté extérieur du tamis de filtre (11), ainsi qu'une cuve de filtrat (13) en forme d'entonnoir étant disposée au-dessous du tamis de filtre (11), l'arbre de vis (4) étant réalisé en forme de cylindre (6) dans la zone de l'ouverture d'admission (19) pour du liquide brut, en s'élargissant en cône (7) en direction de l'ouverture de décharge dans la zone centrale de la presse à vis (1), et en forme de cylindre (8) dans la zone de l'ouverture de décharge, et la cuve de filtrat (13), disposée au-dessous du tamis de filtre (11), étant réalisée avec au moins deux compartiments (14, 15, 27, 28) ou deux zones séparées l'une de l'autre, lesquels deux compartiments (14, 15, 27, 28) sont respectivement munis d'une issue (29, 33) pour du filtrat, **caractérisée en ce que** le premier compartiment (15, 27) présente dans la zone de l'ouverture d'admission (19) une extension longitudinale, qui correspond au moins à la longueur de la zone de réalisation cylindrique (6) de l'arbre de vis (4) dans la zone de l'ouverture d'admission (19) pour du liquide brut, et que l'issue (16) du premier compartiment (15, 27) est raccordée dans la zone de l'ouverture d'admission, par l'intermédiaire d'une conduite de retour (31) pour du filtrat, au dispositif de nettoyage pour le tamis de filtre (11) en vue du recyclage du filtrat.

2. Presse à vis selon la revendication 1, **caractérisée en ce que** le compartiment (15, 27) présente dans la zone de l'ouverture d'admission (19) une extension en longueur de 10% à 35%, en particulier de 15% à 25%, de la longueur de l'arbre de vis (1).

3. Presse à vis selon l'une des revendications 1 et 2, **caractérisée en ce que** sont prévus, dans la conduite de retour (31), un dispositif de pompage (32), ainsi qu'un dispositif de commande ou de réglage (30) et une issue directe (16).

4. Presse à vis selon l'une des revendications 1, 2 et 3, **caractérisée en ce qu'**il est prévu en supplément un trop-plein (20) du premier compartiment (15, 27) dans la zone de l'ouverture d'admission (19) en direction d'au moins un autre compartiment (14, 28) dans la zone de l'ouverture de décharge.

5. Presse à vis selon l'une des revendications 1 à 4, **caractérisée en ce que** l'issue (33) de le au moins un autre compartiment (14, 28) est raccordée dans la zone de l'ouverture de décharge, par l'intermédiaire d'un dispositif de recyclage (38), à une arrivée, en particulier une pompe d'alimentation (36) pour du liquide brut.

6. Presse à vis selon la revendication 5, **caractérisée en ce que** le dispositif de recyclage est muni d'une pompe (36), d'un dispositif de commande ou de réglage (34), ainsi que d'une conduite de recyclage (35) dans l'arrivée (19) pour du liquide brut et d'une issue directe.

7. Presse à vis selon l'une des revendications 1 à 6, **caractérisée en ce que** le tamis de filtre (4) est réalisé, dans la zone du premier compartiment (15), avec des trous oblongs pourvus de zones d'extrémité semi-circulaires, et avec des trous ronds dans la zone de le au moins un autre compartiment (14).

8. Presse à vis selon la revendication 7, **caractérisée en ce que** l'extension longitudinale des trous oblongs correspond à environ 1,5 à 3 fois le diamètre des trous ronds.

9. Presse à vis selon l'une des revendications 1 à 8, **caractérisée en ce que** le dispositif de nettoyage (18) pour le tamis de filtre (4) est réalisé sous forme d'au moins un porte-buses (18) monté mobile et présentant des buses de pulvérisation, et que les buses de pulvérisation du porte-buses (18) peuvent être sollicitées par une pression de liquide variable d'un liquide de nettoyage, renfermant au moins en partie du filtrat du premier compartiment de la cuve de filtrat.

10. Presse à vis selon la revendication 9, **caractérisée en ce que** le porte-buses du dispositif de nettoyage entoure essentiellement la totalité du pourtour du tamis de filtre (11) et est entraînable en un mouvement de va-et-vient, qui balaye essentiellement la totalité de l'extension longitudinale du tamis de filtre (11).

11. Presse à vis selon l'une des revendications 1 à 10, **caractérisée en ce que** l'arbre de vis (4) présente, au moins dans la zone de réalisation cylindrique (6) de l'ouverture d'admission (19), de préférence à peu près dans la zone de l'extension longitudinale du premier compartiment (15) dans la zone de l'ouverture d'admission, deux pales d'hélice (9, 10) de même pas, qui présentent un bord de fuite en vis-à-vis l'un de l'autre.
